Europäisches Patentamt

European Patent Office

Office européen des brevets

(11) Veröffentlichungsnummer: **0 297 472**
**A1**

## EUROPÄISCHE PATENTANMELDUNG

(21) Anmeldenummer: 88110170.3

(22) Anmeldetag: 25.06.88

(51) Int. Cl.4: **G05D 13/62**

(30) Priorität: 30.06.87 DE 3721477

(43) Veröffentlichungstag der Anmeldung:
04.01.89 Patentblatt 89/01

(84) Benannte Vertragsstaaten:
**ES GR**

(71) Anmelder: **Deutsche Thomson-Brandt GmbH
Postfach 2060
D-7730 Villingen-Schwenningen(DE)**

(72) Erfinder: **Gleim, Günter, Dipl.-Ing.
Oberer Sonnenbühl 22
D-7730 Villingen(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) **Schaltungsanordnung zur Ansteuerung von Motoren.**

(57) Die Schaltungsanordnung zur Ansteuerung von Motoren umfaßt eine Wicklungsanordnung, deren Anschlüsse mittels einer Kommutierungseinrichtung mit Stromquellen verbindbar sind.

Zur Ermöglichung schneller Beschleunigungs- und Bremsvorgänge des Rotors des Motors sind gleichzeitig mehrere oder mehrere Gruppen von Stromquellen mit denselben Anschlüssen verbindbar. Dadurch kann ein eine Bremsung bewirkendes Drehfeld einem eine Beschleunigung bewirkenden Drehfeld überlagert werden, ohne daß eine Regelschleife für die Stromquellen, die das eine Beschleunigung bewirkende Drehfeld erzeugen, unterbrochen werden muß.

Die Erfindung ist besonders anwendbar bei digitalen oder analogen Bandaufzeichnungsgeräten.

EP 0 297 472 A1

## Schaltungsanordnung zur Ansteuerung von Motoren

Die Erfindung betrifft eine Schaltungsanordnung zur Ansteuerung von Motoren nach dem Oberbegriff des Anspruchs 1.

Bei Motoren für Präzisionsantriebe, bei denen es neben der exakten Einhaltung vorgegebener Drehzahlwerte auf auch eine schnelle Drehzahländerung und Einnahme der veränderten Drehzahlwerte ankommt, ist es bekannt, die Einflüsse der Wicklungsanordnung mittels einer Kommutierungseinrichtung mit Stromquellen zu verbinden, um so den Rotor des Motors einem vorgegebenen Wechselfeld folgen zu lassen und die Drehzahl durch eine Rückführung zu überwachen. Auf Grund der angetriebenen Masse ist die gewünschte Reaktion des Rotors aber nicht trägheitslos sondern mit einer mehr oder weniger großen Verzögerung verbunden.

Soll der Rotor eine höhere Drehzahl einnehmen, so kann die Verzögerung dadurch verkleinert werden, daß durch entsprechende Ansteuerung ein hohes positiv gerichtetes Drehmoment auf den Rotor ausgeübt wird, das solange aufrechterhalten bleibt, bis durch die Rückführung das Erreichen der gewünschten Drehzahl erkannt wird und dann die Ansteuerung wieder auf das stationäre, positiv gerichtete Drehmoment reduziert wird, das zur Beibehaltung der Drehzahl erforderlich ist. Eine Veränderung der Drehzahl auf einen kleineren Wert kann dadurch besonders schnell erreicht werden, daß die stationäre Ansteuerung abgeschaltet wird, anschließend ein entgegengesetztes, also negativ gerichtetes Drehmoment aufgebracht wird und nach Erreichen der verminderten Drehzahl wieder zur stationären Ansteuerung zurückgekehrt wird. Ein Problem bei dieser Maßnahme besteht jedoch darin, daß die nach dem Abklingen des negativen gerichteten Drehmoments erreichte Drehzahl nicht immer genau der angestrebten Solldrehzahl entspricht und somit noch ein weiterer Brems oder Beschleunigungsvorgang erforderlich ist. Zusätzlich muß die Kommutierungsfolge der Anschlüsse der Wicklungsanordnung wieder mit der momentanen Rotordrehung synchronisiert werden.

Es wäre deshalb wünschenswert, die Ansteuerung zur Erzielung eines positiv gerichteten Drehmoments auch während der Zeit aufrechtzuerhalten, in der ein negativ gerichtetes Drehmoment aufgeprägt wird. Dadurch würde über die Rückführung erreicht, daß die Kommutierungsfolge der Anschlüsse der Wicklungsanordnung auch während der Bremsung synchron arbeitet. Hier besteht jedoch das Problem, daß die Ansteuereinrichtungen in ihrer entgegengesetzter Wirkung auf den Rotor einander gegenseitig behindern oder gar zerstören.

Die Erfindung bezieht sich auf das zuletzt genannte Problem. Ihr liegt die Aufgabe zugrunde, eine Schaltungsanordnung zur Ansteuerung von Motoren zu schaffen, die eine sehr präzise und schnell reagierende Änderung der Drehzahl sowohl zu hören als auch zu niedrigeren Drehzahlwerten ermöglicht.

Die Aufgabe wird bei einer Schaltungsanordnung nach dem Oberbegriff des Anspruchs 1 durch die im kennzeichnenden Teil angegebenen Merkmale gelöst.

Die erfindungsgemäßen Maßnahmen gestatten es, dieselbe Wicklungsanordnung zum Beschleunigen und Bremsen zu verwenden. Dabei wird durch die Ausbildung der die Energieeinspeisung in die Wicklungsanordnung vornehmenden Quellen als Stromquellen eine ungestörte Überlagerung der eingespeisten Ströme erreicht, so daß die Energiequellen sich bei gleichzeitigem Wirksamwerden nicht gegenseitig zerstören. Statt einer einzigen Stromquelle können auch Gruppen von Stromquellen vorgesehen werden, wobei die Anzahl der jeder Gruppe zugehörigen Stromquellen oder Teilstromquellen nach der Polzahl des Motors und gegebenenfalls danach bemessen sein kann, ob uni- oder bipolare Ansteuerung gewählt ist.

Vorzugsweise werden die Stromquellen so ausgebildet, daß sie unabhängig voneinander ansteuerbar sind. Auf diese Weise kann bei Vorhandensein einer Drehzahlüberwachung, z.B. mittels Tachogenerator und PLL-Schaltung, die drehzahlsynchrone Kommutierung aufrechterhalten bleiben, während mittels der anderen Stromquelle eine Veränderung der Drehzahl des Motors herbeigeführt wird. Der Motor kann bei Abschalten der anderen Stromquelle dann schneller reagieren und die ursprüngliche Drehzahl erreichen, da nicht abgewartet zu werden braucht, bis die drehzahlsynchrone Kommutierung im Falle einer vorangegangenen Unterbrechung wiederhergestellt ist.

Besonders vorteilhaft ist die erfindungsgemäße Maßnahme anwendbar, wenn die Wicklungsanordnung des Motors bipolar angesteuert wird. Auf diese Weise wird durch bessere Kupferausnutzung ein höheres Drehmoment und damit bei gleichbleibender Masse eine schnellere Reaktion auf Umsteuervorgänge erzielt.

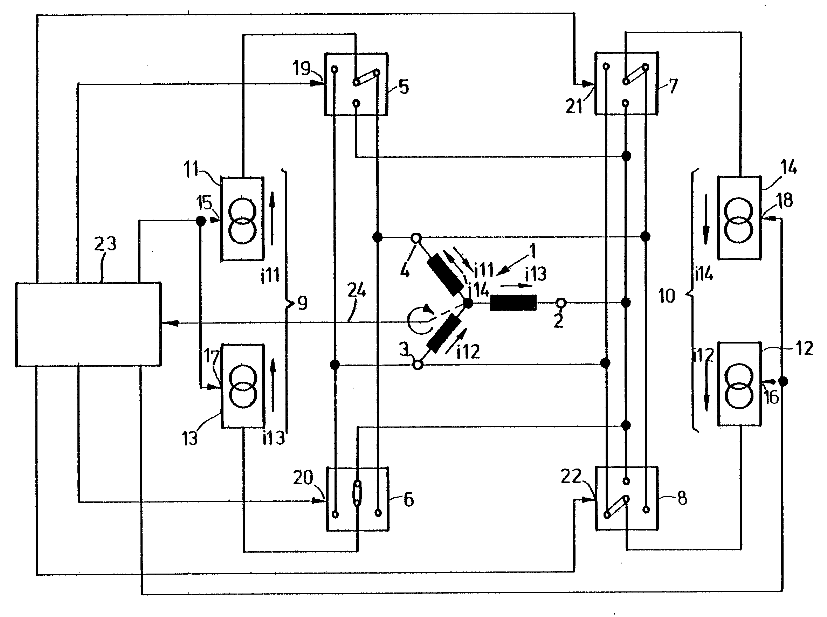

Weiterbildungen und vorteilhafte Ausführungsformen der Erfindung ergeben sich aus den Ansprüchen, der Beschreibung und der Zeichnung, die ein Ausführungsbeispiel der Erfindung veranschaulicht.

Die Zeichnung zeigt als Bestandteil einer Schaltungsanordnung zur Ansteuerung von Motoren im Blockschaltbild eine Anordnung von Stromquellen, die über eine Kommutierungseinrichtung mit Anschlüssen einer Wicklungsanordnung des Motors verbindbar sind. Dabei ist eine dreiphasige Wicklungsanordnung 1 mit Anschlüssen 2, 3 und 4 über Kommutierungseinrichtungen 5, 6, 7 und 8 mit Gruppen von Stromquellen 9 und 10 verbunden. Die Gruppen von Stromquelle 9 und 10 bestehen jeweils aus einer Teilstromquelle 11 bzw. 12 für positiv gerichtete Ströme und aus Teilstromquellen 13 bzw. 14 für negativ gerichtete Ströme. Diese Anordnung gestattet also eine bipolare Ansteuerung des Motors.

Wenn eine der beiden Gruppen von Stromquellen 9 oder 10 in Betrieb sind, so sind immer die dieser Gruppe zugeordneten Teilstromquellen 11 und 13 bzw. 12 und 14 gleichzeitig eingeschaltet. Die Gruppen von Stromquellen 9 dienen zur Beschleunigung während die Gruppen von Stromquellen 10 zur Verzögerung dienen. Mittels der Kommutierungsschaltungen 5 und 7 werden die Teilstromquellen 11 und 13 jeweils mit denjenigen Anschlüssen 2, 3, 4 der Wicklungsanordnung 1 des Motors verbunden, mit denen unter Berücksichtigung der Stellung des anzutreibenden Rotors ein eine Beschleunigung herbeiführendes Drehfeld erzeugbar ist. Entsprechendes trifft für die Bremsung auf die Gruppe von Stromquellen 10 zu, bei der die Teilstromquellen 12 und 14 mittels der Kommutierungsschalteinrichtungen 6 und 8 ebenfalls mit den Anschlüssen 2, 3, 4 der Wicklungsanordnung 1 verbindbar sind. Dabei kann auch der Fall eintreten, daß mit demselben Anschluß gleichzeitig zwei Stromquellen verbunden werden, also z.B. mit dem Anschluß 4 die Teilstromquelle 11 und die die Teilstromquelle 14. Durch die Ausbildung der Energiequellen als Stromquellen tritt hier jedoch nur eine einfache Überlagerung der Ströme ohne eine Gefährdung der Stromquellen selbst ein. Die Kommutierungseinrichtungen 5, 6, 7 und 8 sowie die Gruppen von Stromquellen 9 und 10 besitzen Steuereingänge 15,16,17,18,19,20,21,22, die mit einer Steuerschaltung 23 verbunden sind. Die Steuerschaltung 23 ist dabei phasengestützt, wie durch eine Rückführung 24 angedeutet ist. Dadurch wird erreicht, daß die durch die Stromquellen 11,12,13,14 in der Wicklungsanordnung 1 erzeugten Drehfelder genau der Motordrehbewegung angepaßt sind.

Auf diese Weise ist eine Überlagerung der Drehfelder möglich, die in der gewünschten Weise zu einer Beschleunigung oder einer Bremsung führen kann, ohne daß eine Regelschleife unterbrochen werden muß. Eine Phase aus der kommutierten Ansteuerung, bei der Wicklungsanordnung 1 sowohl Strom aus der der Beschleunigung dienenden Gruppe 9 von Stromquellen 11,13 als auch Strom aus der der Bremsung dienenden Gruppe 10 von Stromquellen 12,14 zugeführt wird, ist in der Zeichnung veranschaulicht.

In dieser Phase ist die Teilstromquelle 11 mit dem Anschluß 4, die Teilstromquelle 13 mit dem Anschluß 2, die Teilstromquelle 14 mit dem Anschluß 4 und die Teilstromquelle 12 mit dem Anschluß 3 verbunden. In die Wicklungsanordnung 1 fließt dann über den Anschluß 2 ein Strom $-i_{13}$, über den Anschluß 3 ein Strom $+i_{12}$ und über den Anschluß 4 ein Strom $+i_{11}-i_{14}$. Die Indizes stellen dabei den Bezug zur stromliefernden Stromquelle her.

## Ansprüche

1. Schaltungsanordnung zur Ansteuerung von Motoren, bei denen die Anschlüsse (2,3,4) einer Wicklungsanordnung (1) mittels einer Kommutierungseinrichtung (5,6,7,8) mit Stromquellen (11,12,13,14) verbindbar sind, dadurch gekennzeichnet, daß gleichzeitig mehrere oder mehrere Gruppen (9,10) von Stromquellen (11,12,13,14) mit denselben Anschlüssen (2,3,4) verbindbar sind.

2. Schaltungsanordnung nach Anspruch 1, dadurch gekennzeichnet, daß die gleichzeitig mit denselben Anschlüssen (2,3,4,) verbindbaren Stromquellen (11,12,13,14) oder Gruppen (9,10) von Stromquellen (11,12,13,14) unabhängig voneinander steuerbar sind.

3. Schaltungsanordnung nach Anspruch 1 oder 2, dadurch gekennzeichnet, daß eine erste Stromquelle (11,13) oder Gruppe (9) von Stromquellen (11,13) zur Beschleunigung und eine zweite Stromquelle (10) oder Gruppe (10) von Stromquellen (12,14) zur Bremsung dient.

4. Schaltungsanordnung nach einem oder mehreren der Ansprüche 1 bis 3, dadurch gekennzeichnet, daß die Gruppen (9,10) von Stromquellen (11,13;12,14) komplementäre, an unterschiedliche Anschlüsse (2,3,4) gleichzeitig anlegbare, entgegengesetzt gepolte Teilstromquellen (11;13;12;14) umfaßt.

5. Schaltungsanordnung nach einem oder mehreren der Ansprüche 1 bis 4, dadurch gekennzeichnet, daß die Stromquellen (11,12,13,14) oder Gruppen (9,10) von Stromquellen (11,12,13,14) über eine Kommutierungseinrichtung aus elektronisch gesteuerten Schaltern (5,6,7,8) mit den Anschlüssen (2,3,4) der Wicklungsanordnung (1) verbindbar sind.

6. Schaltungsanordnung nach einem oder mehreren der Ansprüche 1 bis 5, dadurch gekennzeichnet, daß die komplementären Teilstromquellen (11;13;12;14) mittels einer Stromspiegelschaltung steuerbar sind.

7. Schaltungsanordnung nach einem oder mehreren der Ansprüche 1 bis 6, dadurch gekennzeichnet, daß Steuereingänge (15,16,17,18) der Stromquellen (11,12,13,14) bzw. der Stromspiegelschaltung und Steuereingänge (19,20,21,22) der Kommutierungseinrichtung (5,6,7,8) mit einer motordrehzahl- und phasengestützten Steuerschaltung (23) verbunden sind.

8. Schaltungsanordnung nach einem oder mehreren der Ansprüche 1 bis 7, dadurch gekennzeichnet, daß die der Beschleunigung dienenden Stromquellen (11,13) ständig angesteuert und die der Bremsung dienenden Stromquellen (12,14) be-darfsweise angesteuert sind.

**Europäisches Patentamt**

**EUROPÄISCHER RECHERCHENBERICHT**

Nummer der Anmeldung

EP 88 11 0170

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 443 186 (C. MARTIN) <br> * Figur 2 * <br> --- | 1 | G 05 D 13/62 |
| A | US-A-4 072 883 (HONEYWELL INC.) <br> * Zusammenfassung; Ansprüche * <br> --- | 1 | |
| A | PATENT ABSTRACTS OF JAPAN, Band 10, Nr. 192 (E-417)[2248], 5. Juli 1986; & JP-A-61 35 183 (HITACHI LTD) 19-02-1986 <br> --- | | |
| A | DE-A-2 719 200 (SIEMENS AG) <br> --- | | |
| A | DE-A-3 422 368 (RICOH CO.) <br> ----- | | |

**RECHERCHIERTE SACHGEBIETE (Int. Cl.4)**

G 05 D 13/62
H 02 P

Der vorliegende Recherchenbericht wurde für alle Patentansprüche erstellt

| Recherchenort | Abschlußdatum der Recherche | Prüfer |
|---|---|---|
| DEN HAAG | 21-09-1988 | BEYER F. |